**Europäisches Patentamt**

**European Patent Office**

**Office européen des brevets**

(19)

(11) Veröffentlichungsnummer : **0 092 716 B2**

(12) # NEUE EUROPÄISCHE PATENTSCHRIFT

(45) Veröffentlichungstag der neuen Patentschrift :
19.08.92 Patentblatt 92/34

(51) Int. Cl.⁵ : **F16J 15/34, C04B 35/00**

(21) Anmeldenummer : **83103445.9**

(22) Anmeldetag : **08.04.83**

(54) **Gleitkörper, Verfahren zu seiner Herstellung.**

(30) Priorität : **10.04.82 DE 3213378**

(43) Veröffentlichungstag der Anmeldung :
**02.11.83 Patentblatt 83/44**

(45) Bekanntmachung des Hinweises auf die
Patenterteilung :
**01.03.89 Patentblatt 89/09**

(45) Bekanntmachung des Hinweises auf die
Entscheidung über den Einspruch :
**19.08.92 Patentblatt 92/34**

(84) Benannte Vertragsstaaten :
**AT CH DE FR GB IT LI SE**

(56) Entgegenhaltungen :
**FR-A- 2 436 920**
**GB-A- 1 418 663**
**US-A- 3 874 680**

(73) Patentinhaber : **Hoechst CeramTec
Aktiengesellschaft
Wilhelmstrasse 14
W-8672 Selb (DE)**
Patentinhaber : **Pacific Wietz GmbH + Co. KG
Flaspoete 101
W-4600 Dortmund (DE)**

(72) Erfinder : **Heinrich, Jürgen, Dr. Dipl.-Ing.
Göringsreutherstrasse 1
W-8671 Schönwald (DE)**
Erfinder : **Krauth, Axel, Dr. Dipl.-Ing.
Oberweissenbach 58
W-8672 Selb (DE)**
Erfinder : **Victor, Karl-Heinz, Dipl.-Ing. (FH)
Wakefieldstrasse 36
W-4620 Castrop-Rauxel (DE)**
Erfinder : **Peeken, Heinz, Dr. Ing.
Am Pannhaus 1
W-5100 Aachen (DE)**

(74) Vertreter : **Patentanwälte Dr. Solf & Zapf
Zeppelinstrasse 53
W-8000 München 80 (DE)**

EP 0 092 716 B2

**Beschreibung**

Die Erfindung betrifft einem Gleitkörper in Ringform für Gleitringdichtungen der im Oberbegriff des Anspruchs 1 genannten Art.

Axiale und radiale Gleitringdichtungen dienen in der Regel zur Abdichtung von umlautenden Maschinenteilen gegen Fluide, (flüssige oder gasförmige Medien), und weisen meist einen feststehenden und einen umlaufenden Gleitring auf, die mit einem Federelement gegeneinandergedrückt werden. Die Gleitringe bilden einen Dichtspalt. in dem die Gleitflächen der Gleitringe sich gegenüberliegend angeordnet sind. Im Betrieb der Dichtung soll sich im Dichtspalt ein flüssiges Dichtmittel befinden, das unter Druckgefälle steht.

Für schwierige Abdichtungsfälle können z. B. axiale Gleitringdichtungen zum Einsatz kommen. die eine hydrostatisch-hydrodynamische Dichtung gewährleisten. Aufgrund einer entsprechenden Anordnung wird der Sperr- und Schmierflüssigkeitsdruck gesteuert, so daß die Dichtung hydrostatisch entlastet wird und auch bei hohem Innendruck anlaufen kann. Zudem sind zumindest in der Oberfläche einer Gleitfläche der Gleitringe sogenannte Hydrodynamisierungsvertiefungen eingebracht (DE-A-1 475 621). Es handelt sich bei den bekannten Vertiefungen um Sackbohrungen gleicher Tiefe und gleichen Durchmessers, die längs eines Kreises äquidistant angeordnet sind und mit randoffenen Nuten zusammenwirken. Die Vertiefungen sollen die Schmiermittelreibung garantieren, indem eine hydrodynamische Schmier-und Tragwirkung eingestellt wird. Die nicht optimale Wirkung dieser bekannten Vertiefungen soll gemäß DE-A-2 928 504, die eine Gleitkörper der eingangs genannten Art betrifft, dadurch verbessert werden, daß die einzelnen Hydrodynamisierungsvertiefungen wechselnde Tiefe mit einer Tiefenperiodizität aufweisen, die längs des Umfangs periodisch zu- und wieder abnimmt. Diese Anordnung ist nur mit erheblichem Aufwand und bei Verwendung nicht spröder Werkstoffe zu verwirklichen, weil das Einbringen derartiger Vertiefungen in spröde Werkstoffe nahezu unmöglich ist. Die bekannte Anordnung ist außerdem, wie alle anderen bekannten Anordnungen, nicht an wechselnde Belastungen anpaßbar, die während eines Betriebs der Gleitringdichtung auftreten können.

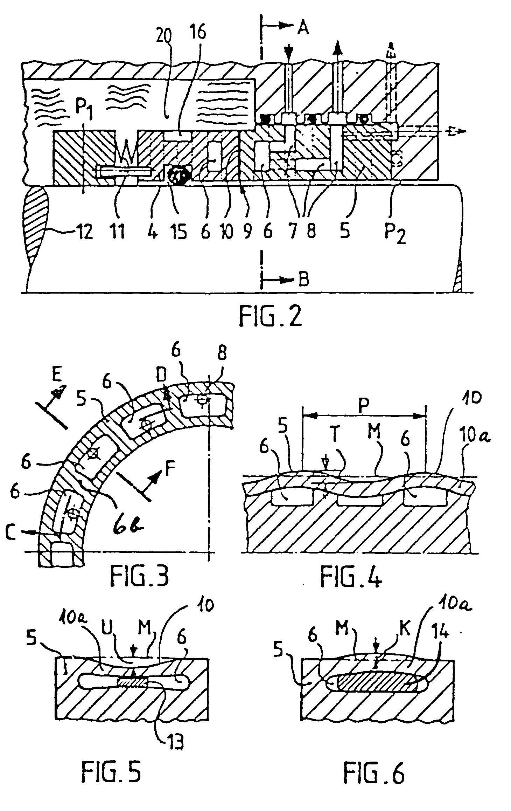

Die FRA-2 436 920 betrifft eine Gleitringanordnung, bei der die unmittelbare Berührung fester Gleitflächen im Betrieb zumindest vermindert ist. Diese Anordnung macht von der bekannten Tatsache Gebrauch. daß es Vorteile bietet, den zwischen den Gleitflächen vorhandenen. mit Fluid gefüllten Spalt nicht über der gesamten Fläche gleich breit zu halten, sondern seine Breite (d. h. den Abstand der Gleitflächen) in radialer Richtung zu verändern (sogenannte konische Spalte. auch V- bzw. A-Spalte genannt). Das die Gleitflächen separierende Fluid wird vom breiteren Ende her unter seinem Eigendruck oder durch Pumpen in den Spalt eingepreßt und kann an der Seite der geringsten Spaltbreite als sogenannter Leckagefluß austreten. Die Fig. 2 und 3 dieser Entgegenhaltung veranschaulichen diese Funktion: Aus dem Gebiet hohen Fluiddruckes $P_1$ (13) strömt das Fluid, wie aus Fig. 3 der Anlage 2 ersichtlich. durch den in radialer Richtung sich verengenden Spalt in das Gebiet niedrigen Fluiddruckes $P_2$ (14). Hierbei bildet sich im Spalt der Fluiddruck $P_F$ aus, der in Fig. 3 eingezeichnet ist. Dieser Druck separiert die Gleitelemente 20 und 17 voneinander. Man erkennt, daß der gesamte, die Trennung der Gleitelemente bewirkende Druck aus dem Bezirk 13 zugeführt werden muß. An keiner Stelle des Spaltes ist der Druck größer als $P_1$.

Der Hohlraum 28 unter der Gleitfläche 29 dient Kühlzwecken. Er ist rundumlaufend und nicht unterbrochen, so daß sich zwischen den Gleitflächen A und 29 ein vollkommen rotationssymmetrischer konischer Spalt ergibt.

Es ist daher für diese Gleitanordnung mit konischem Spalt charakteristisch, daß sich der Flächenabstand d, d.h. die Spaltbreite, nur in radialer, nicht aber in tangentialer Richtung ändert, d.h. der Flächenabstand auf einem Umfang mit konstantem Radius (in Fig. 2 der Anlage 2 z. B. mit $r_x$ bezeichnet) gemessen stets gleich ist. Aus der GBA-1 418 663 ist ein Verfahren zur Herstellung eines Körpers bekannt, wobei einzelne Schichten gebildet und zusammengefügt wer den. Gemäß dieser Patentschrift werden Folien aus Keramik hergestellt, in die Folien verschiedene Hohlkammern oder Ausnehmungen gestanzt und geprägt, auf die einzelnen Folien ein Laminierungshilfsmittel aufgetragen und die einzelnen Folien zu einem Körperpaket gestapelt. Das Laminieren der einzelnen Schichten erfolgt im Stapel, wobei die organischen Bestandteile ausgeheizt werden.

Eine Gleitringdichtung soll gute Notlaufeigenschaften aufweisen und resistent gegen Agression des Fluids sein. Zudem muß sie den Temperaturen standhalten, die während des Betriebs auftreten können.

Bei hohen Drücken und Temperaturen sind besondere Maßnahmen zur Kühlung der Gleitringe erforderlich. In diesem Zusammenhang ist es bekannt, Kühlmittelkanäle in Gleitringkörpern vorzusehen, die von einem Kühlmittel durchströmbar sind (CH-A 413 522). Das Einbringen der Kanäle ist jedoch sehr schwierig und aufwendig und insbesondere auch in keramischen Werkstoffen nur mit erheblichem. kaum vertretbarem Aufwand möglich.

Aufgabe der Erfindun sind Einstellung und Anpassung des Hydrodynamisierungseffektes bei einem Gleitkörper der eingangs genannten Art an den Betrieb bei Betriebsaufnahme unter Beibehaltung einer ausreichenden Festigkeit.

Gelöst wird diese Aufgabe durch die kennzeichnenden Merkmale des Anspruchs 1. Vorteilhafte Weiterbildung der Erfindung sind in den Ansprüchen 2 bis 30 angegeben. Die Ansprüche 31 bis 40 betreffen ein vorteilhaftes Verfahren zur Herstellung des erfindungsgemäßen Gleitkörpers.

Die mit der Erfindung erzielten Vorteile bestehen insbesondere darin, daß über eine Temperatur- und/oder Druckregelung an den Gleitflächen eine bessere Hydrodynamität möglich wird. Über die Gewährleistung besserer hydrodynamischer Laufverhältnisse wird einerseits ein geringerer Verschleiß erreicht und andererseits über eine gezielte Gesamtverformung, insbesondere am Spalt, eine möglichst geringe Leckage erzielt. Die Hydrodynamität wird durch die erfindungsgemäßen Maßnahmen ermöglicht, und zwar einmal über die elastische, vorzugsweise veränderbare, Verformung der Abdeckung über den beliebig unter der Gleitfläche angebrachten Hohlkammern und/oder am Innen- oder Außendurchmesser angeordneten Ausnehmungen; ferner durch gezielte Kühl- oder Aufheizvorgänge sowie auch durch aufgegebenen Über- oder Unterdruck in den Hohlkammern.

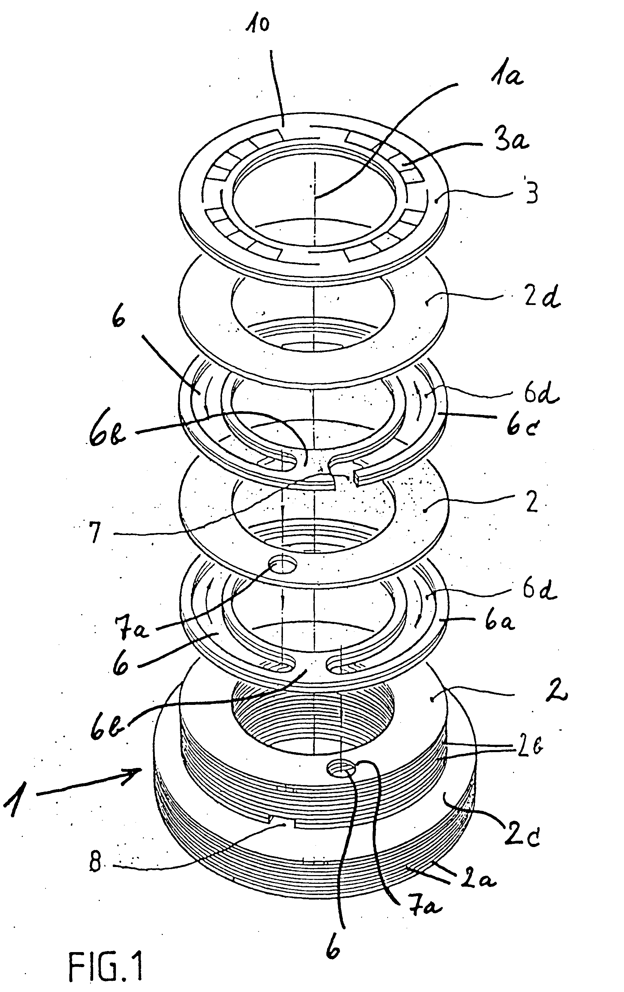

Das erfindungsgemäße Verfahren zur Herstellung von komplizierten Gleitkörpern mittels Folientechnik bringt unter anderem den Vorteil mit sich, daß man mit relativ geringem Arbeitsaufwand Hohlkammern möglichst nahe an die Gleitfläche bringen kann und man keiner Konstruktionsbeschränkung unterliegt, da sogar hintergriffige Kammern bzw. Ausnehmungen hiermit erzeugt werden können. Durch das Stanzen und Prägen der Folien lassen sich insbesondere komplizierte Kanäle bzw. Kammern, aber auch sehr komplizierte Konturen des Gleitkörpers ohne erheblichen Aufwand herstellen. Anhand der Zeichnung wird die Erfindung beispielhaft näher erläuter, wobei bevorzugte Ausführungsformen des erfindungsgemäßen Gleitkörpers in den Figuren 3 bis 10 dargestellt sind, während die Figuren 1 und 2 den allgemeinen Aufbau von Gleitkörpern betreffen; im einzelnen zeigen:

Fig. 1 eine Explosionszeichnung eines Gleitkörpers mit gestanzten Hohlkammern und geprägter Gleitfläche,

Fig. 2 einen Radialschnitt durch eine erfindungsgemäße Gleitringdichtung mit Hohlkammern in dem Gleit- und/oder Gegenring,

Fig. 3 einen Schnitt entlang der Linie A-B in Fig. 2 (Hohlkammern in Draufsicht),

Fig. 4 einen Schnitt entlang der Bogenlinie C-D in Fig. 3 mit einer Welligkeit der Gleitoberfläche,

Fig. 5 einen vergrößerten Schnitt entlang der Linie E-F in Fig. 3 durch eine Hohlkammer mit einer Abstützung,

Fig. 6 einen vergrößerten Schnitt durch die Hohlkammer nach Fig. 5 mit einem elektronischen Bauelement,

Fig. 7 einen Radialschnitt durch einen Gegenring mit einer erfindungsgemäßen Gleitringanordnung,

Fig. 8 einen Radialschnitt durch einen Gleit- und Gegenring mit umlaufend angebrachten Ausnehmungen,

Fig. 9 einen Axialschnitt entlang der Linie K-L in Fig. 8,

Fig. 10 einen Radialschnitt durch einen Teilbereich eines Gleit- und Gegenrings (Verbundkonstruktion),

Fig. 11 ein Flußdiagramm des erfindungsgemäßen Verfahrens zur Herstellung eines Gleitrings.

Der grundsätzliche Aufbau eines Gleitkörpers 1, der als Gleitring ausgebildet ist, ergibt sich aus Fig. 1. Der Gleitring besteht aus dünnen Folienringen 2a, 2b, die konzentrisch zur Achse 1a aufeinander angeordnet und an den Auflageflächen miteinander verbunden sind. Dabei bilden die Innenausnehmungen der Ringe 2a, 2b den Durchgang z. B. für die abzudichtende Welle (nicht dargestellt), während die Außenkonturen der Ringe 2a, 2b die äußere Gestaltung des Gleitrings 1 bilden. Beispielsweise weisen die Ringe 2a einen größeren Außendurchmesser auf als die Ringe 2b, so daß z.B. eine Anlagefläche 2c gebildet wird.

In der einfachsten Form wird der Gleitring 1 lediglich aus Folienringen 2d aufgebaut, die einfach herstellbar, leicht aufeinander stapelbar und zum Festkörper miteinander verbindbar sind.

Die Verwendung von Folien, insbesondere Keramikfolien, bringt jedoch den besonderen Vorteil, daß die Ringe beliebig geformte Ausnehmungen oder Vertiefungen oder Einprägungen aulweisen können, die ohne besonderen Aufwand eingebracht werden können. Die Ausnehmungen bzw. Verformungen können z. B. Durchgangslöcher 7a, z.B. im Ring 2, oder kreisringsegmentartige Ausstanzungen 6d oder entsprechend geformte Einprägungen oder vollständige kreisringförmige Aussparungen oder Einlässe 7 sein. Die Ringe mit Ausnehmungen und/oder Einprägungen kön nen derart aufeinander angeordnet werden, daß zumindest eine z.B. ringförmige Kammer 6 mit einem Auslaß 8 und Einlässen 7 im Gleitringkörper 1 gebildet wird.

Im dargestellten Beispiel gemäß Fig. 1 bilden die Ringe 2b eine ringförmige Kammer mit einem Auslaßöffnung 8 und einem Durchgangsloch 7a. Über dem Ring 2 mit dem Durchgangsloch 7a kann ein Ring 6a mit einer kreisringsegmentförmigen Ausnehmung 6d, die durch einen Steg 6b unterbrochen wird, angeordnet sein. Der Ring 6a wird derart über dem Durchgangsloch 7a angeordnet. daß sich das Loch 7a rechts neben dem Steg 6b befindet. Die Ausnehmung 6d wird durch einen auf dem Ring 6a angeordneten Ring 2 abgedeckt, der ebenfalls ein Durchgangsloch 7a aufweist, das jedoch so positioniert ist, daß das Loch 7a sich links neben dem Steg 6b befindet. Über dem Ring 2 wird ein Ring 6c angeordnet, der auch eine kreisringsegmentförmige Ausnehmung 6d besitzt und zudem einen Einlaß 7 aufweist, die rechts neben dem Steg 6b liegt. Die Ausnehmung 6d des Rings 6c wird durch einen auf dem Ring 2c angeordneten, keine Ausnehmung aufweisenden Ring 2d abgedeckt, auf dem vorzugsweise noch ein Ring 3 mit Hydrodynamisierungsvertiefungen 3a angeordnet ist. Die Vertiefungen sind vorzugsweise eingeprägt. Ein Fluid kann bei dieser Anordnung der Ringe z. B. durch die Einlaßöffnung 8 in die Kammer im Bereich der Ringe 2b, über das Durchgangsloch 7a des Rings 2 in die im Ring 6a gebildete Kammer, aus dieser Kammer über das Durchgangsloch 7a des Rings 2 in die Kammer des Rings 6c und von dort durch den Einlaß 7 nach außen fließen.

Selbstverständlich sind andere Kammerformen und -größen und Verbindungslöcher sowie andere Anordnungen der Kammern und Verbindungselemente realisierbar, weil die Ausnehmungen und/ oder Einprägungen in den Ringen durch einlache Ausstanzungen oder Eindrückungen erreicht werden können. Durch die Verwendung der Folienringe gelingt es, nahezu beliebige, z.B. versetzte, Strömungswege zu bilden, die bisher nicht möglich gewesen sind, die jedoch einen optimalen Durchgang des Fluids gewährfeisten. Die etagenförmige Anordnung von Kammem in axialer Richtung ermöglicht eine Vielzahl von Kammern, auch unterschiedlicher Höhe, zu bilden. Ebenso können die Kammern in ihrer Umfangserstreckung variiert werden, indem z. B. mehrere und/oder längere oder kürzere Stege 6b vorgesehen sind. Auch die Form und Tiefe der Hydrodynamisierungsvertiefungen 3a kann beliebig sein, weil die Einprägung der Formgestaltung kaum Grenzen setzt.

Der Gleitkörper 1 weist beispielsweise einen Außendurchmesser von 50 mm und einen Innendurchmesser von 40 mm auf. Die gestanzten Folienringe haben eine Dicke von 0,8 mm und der Ring 3 eine Dicke von 1,6 mm. Die Hohlkammerbreite beträgt 3 mm. Die Kammern können mit einem Fluid beschickt werden, das eine hohe oder niedrige Temperatur aufweist. Insofern sind die Gleitkörper beheizbar oder kühlbar. Der Zusammenbau eines derartigen Gleitkörpers erfolgt durch Aufeinanderstapeln der einzelnen Folienringe und durch einen anschließenden Laminierungsprozeß.

Eine praktische Anwendung des erfindungsgemäßen Gleitkörpers ergibt sich aus der Fig. 2, die eine Gleitringdichtung mit Hohlkammern 6 im Gleitring 4 und Gegenring 5 zeigt. Zu dieser Gleitringdichtung 4, 5 gehört die Welle 12, auf der der Gleitring 4 rotiert und in geeigneter Weise zur Welle 2 abgedichtet ist. Dagegen ist der Gegenring 5 stationär angeordnet und ebenfalls in geeigneter Weise zum Gehäuse abgedichtet. Gleitring 4 und Gegenring 5 sind im wesentlichen aus keramischen Werkstoffen gefertigt; insbesondere eignet sich als Werkstoff infiltriertes Siliciumkarbid. Als weitere Werkstoffe kommen Aluminium-oxdkeramik mit mehr als 94 Gew.-% Al$_2$O$_3$, wobei der Rest sich auf die Sinterhilfsmittel MgO, CaO und SiO$_2$ bezeiht, als auch Zirkonoxid infrage. Als weitere Werkstoffe sind Glaskeramik und Hartstoffe, wie z. B Wolframcarbid als auch sonstige Hartmetalle. Sintermetalle, Metalle und Graphit, zu nennen. Als Federelemente 11 können alle Arten metallischer Schraubenfedern, Federbälge aus Metall oder Gummi oder sonstige gummielastische Teile wirken, sowie auch magnetische Baukörper. Im Dichtspalt 9 zwischen den Gleitflächen 10 belindet sich normalerweise ein hydraulisches Dichtmittel, welches meist die abzudichtende Flüssigkeit selbst ist und unter einem radialen Druckgefälle steht. Die Hohlkammern 6 selbst könneneine vielfältige beliebige Formgestaltung aufweisen, je nachdem, ob sie für Druck- und/oder Heizungsmaßnahmen der Umgebungs- oder Fremdflüssigkeit 20 vorgesehen sind. Die Einlaßöffnungen 7 und die Ausfaßölhungen 8 dienen der entsprechenden Zuführung der Umgebungs- bzw. Fremdflüssigkeiten 20. Ferner herrscht in diesem gezeigten Beispiel einer Gleitringdichtung ein radiales Druckgefälle, wobei je nach Betriebsverhalten P1 > P2 sein kann.

Anhand der Fig. 3-10 wird nachfolgend die Erfindung beschrieben, die es ermöglicht, den Hydrodynamisierungseffekt zu variieren. Bekannt ist, daß der Hydrodynamisierungseffekt durch die Eigenschaften des im Spalt 9 befindlichen Fluids, durch,die Höhe der Druckdifferenz zwischen P1 und P2 und durch die Form und Anordnung der Vertiefungen sowie auch durch die Temperatur beeinflußt werden kann. Variabel während des Betriebes der Dichtung sind davon allenfalls die Temperatur, in bestimmten Grenzen auch die Art des Fluids und die Druckdifferenz. Es hat sich aber gezeigt, daß diese Variablen keinen druchgreifenden Einfluß haben und daß vornehmlich die Hydrodynamisierungsvertiefungen von entscheidender Bedeutung sind für den Hydrodynamisierungseffekt, weshalb z. B. nach der DE-A 2 928 540 vorgeschlagen wird, durch periodisch wechselnde Tiefen eine « Welligkeit » in den Vertiefungen vorzusehen. Diese sehr aufwendige Raumform mag Verbesserungen in bestimmten Grenzen bringen, diese Grenzen sind jedoch noch viel zu eng.

Die Erfindung geht demgegenüber einen völlig neuen Weg und sieht vor, dicht unterhalb der Gleitoberfläche 10 eines Gleitrings 4 und/oder eines Gegenrings 5 mindestens zwei, vorzugsweise mehr als zwei Kammern 6 nebeneinander anzuordnen und auf den Kammern eine relativ dünne Membranschicht 10a vorzusehen, die flexibel und elastisch verformbar ist. Die Verformung kann durch einen in den Kammern wirkenden Über-oder Unterdruck oder durch einen von außen über den Spalt 9 wirkenden Über- oder Unterdruck erzeugt werden, wobei durch die Verformungen so wohl Erhöhungen als auch Vertiefungen und anstelle einer Erhöhung auch eine Vertiefung geschaffen werden können. Dabei kann z.B. vorgesehen sein, daß in verschiedenen Kammern unterschiedliche Drücke herrschen, so daß bei gleicher Ausgestaltung der Membranschicht 10a unterschiedliche Verformungen auftreten und/oder benachbarte Kammern oder im Abstand befindliche Kammern mit Membranschichten 10a abgedeckt sind, die jeweils unterschiedlich elastisch sind, so daß bei gleichem Druck in den Kammern ebenfalls unterschiedliche Verformungen auftreten.

Die Verformungen sind vorzugsweise von außen beeinflußbar, z. B. durch die Einstellung oder Veränderungen des Druckes. mit dem z.B. ein Fluid durch die Kammern 6 gedrückt wird, oder durch die Veränderung der Temperatur des Fluids in den Kammern. Die Veränderungen können z.B. periodisch durchgeführt werden, wobei auch vorgesehen sein kann. eine Membrane über einer Kammer periodisch nach außen zu drücken und/oder nach innen zu ziehen, so daß eine Beule oder eine Vertiefung entsteht.

Besonders einfach wird die Erfindung durch die Verwendung einer Folie als Membranschicht 10a verwirklicht, die die Kammern 6 des Gleitkörpers 4. 5 abdeckt. Bevorzugt wird die Verwendung eines Rings aus einer Keramikfolie, wobei insbesondere zudem noch vorgesehen sein kann, daß der Ring im Bereich der Gleitfläche 10 eingeprägte Dynamisierungsvertiefungen auf weist. Der Grundkörper des Gleit- bzw. Gegenrings kann dabei aus einem massiven Körper bestehen. Bevorzugt wird jeoch ein Aufbau des Grundkörpers entsprechend Fig. 1, wobei insbesondere vorteilhaft ist, Ringe aus einer Keramikfolie zu verwenden. Dabei kann vorgesehen sein, Ringe aus Keramikfolien unterschiedlicher Zusammensetzung zu verwenden.

Weitere Beispiele werden anhand der Fig. 3-10 im folgenden beschrieben. Fig. 3 zeigt z.B. einen Gegenringkörper 5, in dem mehrere durch Stege 6b voneinander getrennte Kammern 6 nebeneinander eingebracht sind. Vorzugsweise besitzt jede Kammer 6 eine Einlaßöffnung 8, durch die ein Fluid eingeführt werden kann. Auslaßöffnungen sind in Fig. 3 nicht dargestellt, können aber auch vorgesehen sein.

Außerdem können mehrere Kammern mit einem Durchgang (nicht dargestellt) miteinander verbunden sein. Die Kammern sind mit einem Folienring 10a abgedeckt (Fig. 4), dessen äußere Oberfläche die Gleitfläche 10 des z. B. Gegenrings bildet.

Durch sektorale Beeinflußung der Hohlkammern 6 mit Überdruck oder Unterdruck in Beziehung zum jeweiligen Umgebungsdruck oder durch gekühlte oder geheizte Flüssigkeiten entstehen durch elastische, membranartige Verformungen im Folienring 10a Umfangs- oder Radialwelligkeiten auf der Dichffläche 10. Im Dichtspalt 9 zwischen dem Gleitring 4 und dem Gegenring 5 wird dadurch bei zueinander gegenläufigen Drehbewegungen eine Hydrodynamität bewirkt, die einen druckentlastenden, reibungsvermindernden Effekt an den dichtenden Gleitflächen 10 bewirkt, die von außen her durch den Einfluß der Druckdifferenz P1 und P2 und den Federdruck zusammegepreßt werden. Als besonders vorteilhaft hat sich gezeigt, daß von außerhalb durch die erfindungsgemäßen konstruktiven Maßnahmen auf den Dichtspalt 9 und somit auf das Reibverhalten oder das Dichtverhalten Einfluß genommen werden kann, wenn durch Betriebsbedingungen sich ändernde Belastungen dies erfoderlich machen. Daher ist ein nach der Erfindung ausgeführter Gleit körper 1 an die jeweiligen Betriebsbedingungen durch die Veränderung der Raumform der Gleitfläche und damit durch eine größenmäßig bestimmbare Hydrodynamität gezielt anpaßbar. Die einzelnen Hohlkammern 6 können sowohl Anschlüsse für die Einlaßöffnungen 7 und für die Auslaßöffnungen 8 aufweisen.

In Fig. 4 ist in einem stark vergrößerten Maßstab die erzeugte Welligkeit T auf der Gleitfläche 10 gezeigt, die durch eine wellenförmige Formgebung der Membranschicht 10a hervorgerufen wird, wenn die Hohlkammern 6 erfindungsgemäß beeinflußt werden, bzw. wenn auf die Membranschicht 10a partiell unterschiedliche Kräfte ausgeübt werden. Der Periodenwinkel P der Welligkeit kann den Belastungsverhältnissen ebenso angepaßt und beliebig gewählt werden wie die Höhe bzw. Tiefe der Welligkeit. Vorzugsweise wird ein Periodenwinkel P von 90° gewählt. Mit M ist die Oberflächenkontur der Gleitfläche bezeichnet. die z.B. durch Läppbearbeitung hergestellt worden ist. Auf diese Oberflächenkontur M kann im Sinne der Erfindung eine gezielt hergestellte Umfangswelligkeit T aufgebracht werden.

In der Hohlkammer 6 gemäß Fig. 5 ist ein Abstützelement 13 angeordnet, das in beliebiger Form eingebracht werden kann und für die um die Muldentiefe U eindrückende Membranschicht 10a als Stütze wirkt und dadurch die Vertiefung begrenzt. Diese Abstützungselemente 13 können sowohl dabei auf dem Boden als auch auf der Decke der Hohlkammer 6 angebracht werden.

Gemäß Fig. 6 befindet sich in der Hohlkammer 6 ein elektronisches Bauelement 14, das verschiedenen Zwecken dienen kann. Es kann z.B. zum gezielten Heizen der Umgebungs bzw. Fremdflüssigkeit 20 dienen, es kann aber auch so ausgebildet sein, daß es sich bei Wärmezufuhr ausdehnt und bei Wärmeabfuhr schrumpft, wobei diese Bewegungen von der Membranschicht 10a mitgemacht werden.

In den Hohlkammern bzw. Ausnehmungen können ferner Sensoren angebracht werden, die Signale geben, wobei durch die erhaltenen Signale vielfältiger Art Informationen über die Lebensdauer oder Betriebssicherheit erhalten werden und damit auch Einfluß auf die Steuerung der Gleitflächen genommen werden kann.

In die Hohlkammern können aber auch z. B. Magnete eingelegt werden, die nach signalisierter Anforderung aus benachbarten anderen Hohlkammern in Abhängigkeit vom Betriebsverhalten der Gleitringdichtung auf die Dichtflächen so zur Wirkung gebracht werden können. daß abstoßende, d. h. entlastende, oder anziehende, d. h. belastende, Kräfte auf die Membranschicht 10a ausgeübt werden. Sowohl die Abstützelemente 13 als auch die elektronischen Bauelemente 14 können im Sinne der Erfindung dahingehend wirken, daß die Randzonen beeinflußbar werden und somit eine erhebliche Wirkung auf das Dichtverhalten der Gleitringdichtung ausgeübt wird. Die Oberflächenkontur M, die durch das Folienherstellungs-verfahren bedingt ist, kann mit Hilfe der elektronischen Bauelemente 14 gezielt von einer Mulde in eine Erhöhung K umstrukturiert werden.

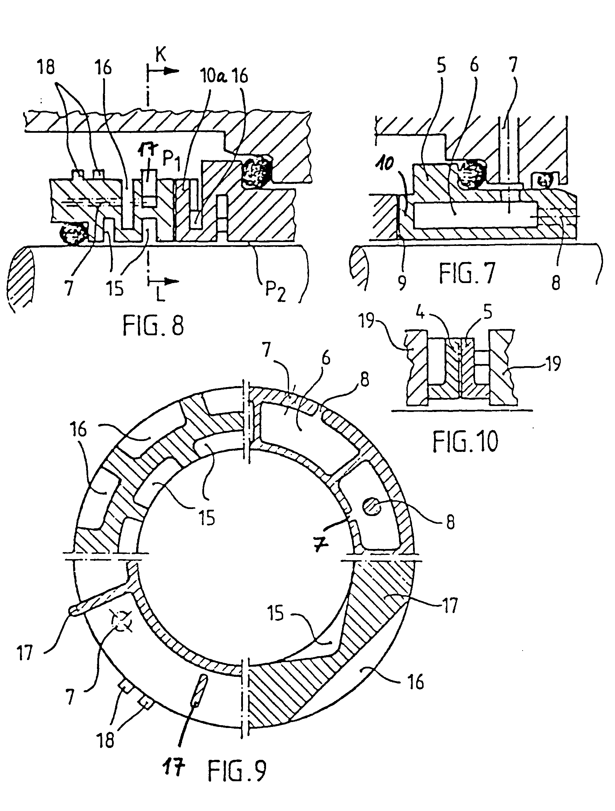

Die Fig. 7 stellt beispielhaft eine weitere Möglichkeit der Formgestaltung des Gleitrings 5 im Hinblick auf die Einlaßöffnung 7 und die Auslaßöffnung 8 dar. In der Hohlkammer 6 sind sektoral in beliebigen Winkeln und beliebigen Formen die Kanäle 7, 8 vorhanden.

Neben oder anstelle der Hohlkammern 6 können nach einer weiteren Ausgestaltung der Erfindung im Gleitkörper 1 Ausnehmungen 15, 16 eingebracht sein, die umlaufend oder nicht umlaufend am Innendurchmesser und/oder am Außen durchmesser angeordnet sind (Fig. 8). Diese Ausnehmungen oder ähnliche Ausnehmungen kön nen dazu beitragen, Verformungen auf der Gleitfläche hervorzurufen. Die komplizierte Raumform eines derartigen Gleitkörpers ist jedoch mit vertretbarem Aufwand nur möglich, wenn Folien, insbesondere Keramikfolien, verwendet werden. Dabei können die Ausnehmungen 15, 16 in gleicher Weise oder zumindest beliebigen, versetzten Vertikalebenen angeordnet sein und hinsichtlich der radialen Erstreckung maßlich jede zweckmäßige Tiefe bekommen. Die axialen Erstreckungen der Ausnehmungen 16 sind beliebig anpaßbar an die Erfordernisse. Ebenso können Stege 18 vorgesehen sein. Die für hydrodynamisches Laufverhalten erlorderliche Umfangswelligkeit wird durch den jeweiligen abzudichtenden Druck des Dichtungsmediums P1/P2 von selbst erzeugt, wobei durch die unterschiedliche Steifigkeit der Wandungen des erfindungsgemäß ausgeführten Gleitkörpers der Grad der Verformung der Gleitfläche im Sinne einer optimalen Gleitringdichtung vor herbestimmbar ist. Im Idealfall wird erreicht, daß mit ansteigendem Abdichtdruck die Hydrodynamität aufgrund elastischen Verhaltens der Gleit-und/oder Gegenringe sich erhöht und somit der Reibwert sinkt und die Kontaktreibung sowie Verschleiß an den Oberflächen 10 vermieden werden. Die Kanäle 7 können wieder vielfältiger Form sein. Sie können als Zuführungskanäle für beispielsweise die Abdichtflüssigkeit dienen oder für Umpumpeinrichtungen vorgesehen sein bzw. zweckmäßigerweise zur Kühlung oder Heizung der Gleitringflächen eingesetzt werden.

Weitere Variationen hinsichtlich der Ausnehmungen 15, 16, 17, 18 gehen aus der Draufsicht aus Fig. 9 hervor. So ergeben sich randoffene Hohlräume 16 am Außendurchmesser oder andererseits randoffene Hohlräume 15 am Innendurchmesser. In Ausnehmungen 16 angebrachte Rippen 17 können vielfältiger Form sein, wobei diese Rippen 17 die Breite der Ausnehmung voll ausfüllen können. Solche Rippen 17 können aber auch über den Außendurchmesser des Gleitkörpers hervorragen und können für Umpumpzwecke einer Umgebungs oder Fremdflüssigkeit 20 dienen. Die Stege 18 am Außenduchmesser, die unter anderem von Folienschicht zu Folienschicht in der Weise versetzt sind, daß ein mehrgängiges Schraubengewinde entsteht, wird dann als Pumpgewinde benutzt, wobei wiederum hier die Fremd-bzw. die Umgebungsflüssigkeit 20 gefördert wird.

Die Fig. 10 zeigt Teilbereiche von Gleit- 4 und Gegenringen 5 als ein weiteres Beispiel, wenn nur der nächste Bereich der Gleitringdichtung 4, 5 mit den Erfindungsmerkmalen ausgestattet wird. Zu diesem Zweck werden scheibenartige Ringe im Sinne der Erfindung gestaltet und als Verbundkonstruktion beispielsweise durch Kleben. Löten. Schrumpfen oder nach anderen vielfältigen mechanischen Methoden auf einem Trägerkörper 19 aufgebracht.

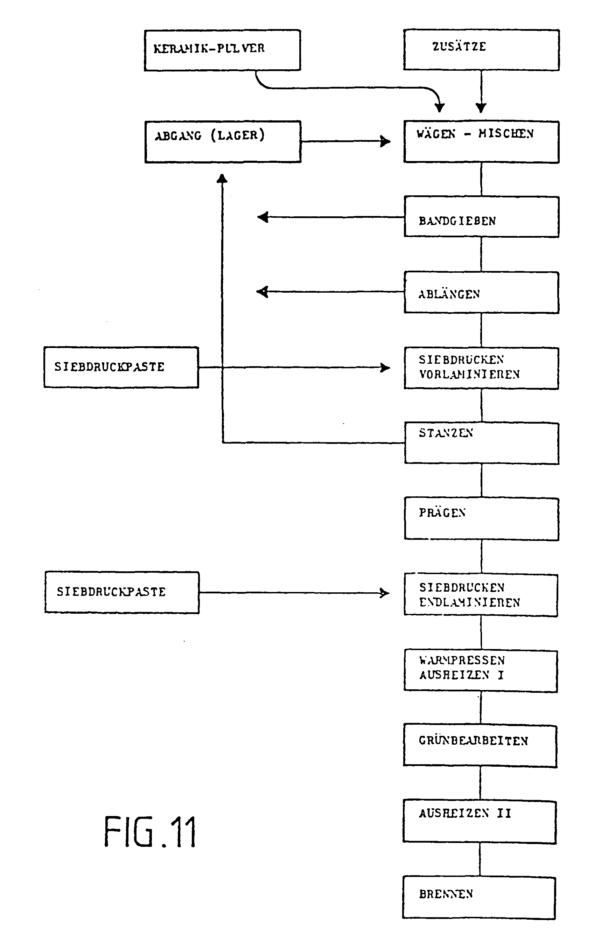

Die Fig. 11 zeigt das Flußdiagramm zur Herstellung des erfindungsgemäßen Gleitkörpers. Für die Herstellung der Folien werden üblicherweise Schlicker verwendet. Diese Schlicker bestehen aus entsprechenden Pulvern. die mit organischen Bindemitteln. Dispergier- und Verdünnungsmitteln und ggf. Weichmachern und sonstigen Hilfsmitteln in Form von Ölen vermischt werden. Für organische Bindemittel dienen als Dispergierungs- und Verdünnungsmittel Wasser oder organische Lösungen wie zum Beispiel Äthanol, Toluol-und Trichloräthylen. Erfindungsgemäß besonders geeignete Rahmenrezepturen für die Herstellung der Folien sind ersichtlich aus der nachfolgenden Tabelle, wobei die Schlickerrezeptur aus den Pulvern und Binde- bzw. Lösemitteln besteht.

Tabelle 1

| Rohstoffe | bevorzugter Bereich (Gew.-%) | spezielles Beispiel (Gew.-%) |
|---|---|---|
| Pulver | 60–70 | 65 |
| Bindemittel | 7–10 | 8 |
| Lösungsmittel | 23–30 | 27 |

Die Viskosität des Schlickers ist insbesondere durch den Lösungsmittelgehalt beeinflußbar. Auch hat sich herausgestellt, daß die Anwendung von Ultraschall bei der Aufbereitung des Gießschlickers vorteilhaft ist. Durch diese Behandlung erhält man einen Gießschlicker mit größerer Homogenität, besseren Gießeigenschaften und einem maximalen Gehält an Feststoffanteilen, was sich besonders auf die Rohdichte der Folie auswirkt. Auf diese Weise kann man Folien mit größerer Packungsdichte und verbesserten mechanischen Eigenschaften bekommen. Weiterhin ist es sinnvoll, am Gießband eine Vibrationsvorrichtung vorzusehen. die den Gießschlicker nochmals verdichtet bzw. eine gleichmäßige Folienstärke über die ganze Bandbreite ermöglicht.

Nach diesem Verfahren werden die Folien nach dem Laminieren auf Fertigmaß gebracht. Werden dabei dicke Folien bzw. sehr hohe Ausnehmungen verlangt. die über die Folienstärke von 0.1 bis 1.5 mm hinausgehen, so werden in einem Vorlaminierungsprozeß die Folien zu einzelnen Karten mit einem Laminierhilfsmittel verbunden. Aus diesen Karten werden dann verschiedene Ausnehmungen ausgestanzt bzw. wird die Folie einem Prägeverfahren unterworfen. Im letzteren Fall werden die Matrizen Temperaturen von 20 bis 120°C und Drücken von 5 bis 100 bar ausgesetzt, wodurch kammartige Vorsprünge auf den Folien entstehen. Die ausgestanzten bzw. geprägten Karten werden dann zu einem Gleitkörper aufgebaut, wobei das Zusammenlaminieren der Einzelschichten mil Hilfe einer Laminierpresse erfolgt. Bei dem Laminierungsvorgang verwendet man eine Pressvorrichtung bei Drücken von 0,1 bis 15 bar, vorzugsweise 1 bar und Zeitintervalle von 1 bis 10 sec. Normalerweise wird bei Raumtemperatur gearbeitet, aber auch Temperaturen bis zu 100°C sind anwendbar. Im einzelnen richtet sich der angewendete Druck nach dem Organikgehalt und der Art der Laminierhilfsmittel. Für den Laminiervorgang benutzt man entweder eine Paste, die vorzugsweise einen Füllstoff enthält oder rein organisches Klebemittel, welche durch Siebdrukken, Sprayen oder Rollen aufgetragen werden. Die Anwendung des Laminierhilfsmittels bringt mehrere Vorteile mit sich, so werden niedrige Drücke beim Laminiervorgang ermöglicht, wodurch eine Verformung der Hohlkammern vermieden wird. Weiterhin wird die Welligkeit der Folien ausgeglichen und schließlich verringert das Laminierhilfsmittel wirkungsvoll die Laminierfehler. Anschließend erfolgt das Ausheizen der organischen Bestandteile bis auf 40 bis 60% des Kunststoffanteils, was eine zusätzliche Rohfestigkeit bewirkt. Damit wird erreicht, daß der Gleitkörper gut bearbeitbar ist, ohne daß die Werkzeuge durch die organischen Bestandteile der Folie verschmieren. Danach erfolgt das Ausheizen der restlichen organischen Bestandteile und das Sintern des Gleitkörpers zwischen 1200 und 2200°C. Eventuell ist noch eine Nachbearbeitung in Form von Schleifen, Läppen oder Polieren notwendig.

Das erfindungsgemäße Verfahren wird nun na her anhand eines Ausführungsbeispiels erläutert. Der erfindungsgemäße Gleitkörper besteht in diesem Fall aus infiltriertem SiC. Für die Herstellung des keramischen Gießschlickers werden 90 Gew.-% SiC-Pulver, 10 Gew.-% Graphitpulver, 24 Gew.-% Äthanol, 10 Gew.-% Toluol, 1 Gew.-% Menhaden-Oil, 8 Gew.-% Polyvinylbutyral und als Weichmacher 5 Gew.% Palatinol und/oder Ucon-Öl zugegeben. Diese Mischung wird nun 20 Stunden in einer Trommelmühle mit $Al_2O_3$-Kugeln gemahlen und der Schlicker wird anschließend evakuiert. Das übliche Verziehen des Schlickers zur Folienherstellung erfogt auf einem Stahlband. Die Schlickerzugabe geschieht über einen Gießschuh, wobei die Folienstärke durch eine einstellbare Spalthöhe von 0.2 bis 1,5 mm am Gießschuh bestimmt wird. Die Folie wird dann vom Stahlband abgezogen und vereinzelt. Dabei hat sich als zweckmäßig herausgestellt. sogenannte Karten aus zwei bis drei Folien aufzubauen. Die Verbindung der einzelnen Folien untereinander wird durch Aufsprayen bzw. durch Auftragen eines Laminierhilfsmittels erreicht. Im letzteren Fall verwendet man eine Paste, die beispielsweise aus 90 Gew.-% SiC und 10 Gew.-% Graphit besteht. In der Paste sind ferner 20 bis 40 Gew.-% ungesättigte Alkohole und 3 bis 20 Gew.-% Bindemittel, die Weichmacher und Polyvinylbutyral enthalten. Der Aufdruck der Paste erfolgt in diesem Fall im Siebdruckverfahren. Gleichzeitig werden durch den Feststoffgehalt der Paste die Oberflächenunebenheiten ausgeglichen. Ebenfalls erfolgt ein oberfächiges Anlösen der Folien durch die Paste, was später zu homogenen Verbindungen der einzelnen Schichten führt. Es werden nur diejenigen Stellen bedruckt, die zur Verbindung der Folien notwendig sind. Damit wird erreicht. daß die ausgestanzten Teile wieder zurückgeführt und dem Gießschlicker beigesetzt werden können.

Bei besonders komplizierter Anordnung von Ausnehmungen bzw. Hohlkammern werden die Einzelfolien bzw. die Karten bei Temperaturen bis 100 °C und Drücken bis 50 000 MPa geprägt.

Der Zusammenbau des Gleitrings erfolgt durch Aufeinanderlegen der einzelnen Folien bzw. Karten. Dabei brauchen die einzelnen Folien nicht aus dem gleichen Material bestehen, insbesondere kann die Deckfolie an den Gleitflächen eine andere Materialkomponente, wie z. B. Graphit, enthalten, die zu einem niedrigen Gleitreibungskoeffizient führt.

Der gestapelte Gleitring wird, nachdem er der Laminierpresse entnommen worden ist, bei Temperaturen zwischen 100 bis 200°C einer Temperaturbehandlung unterworfen. Dabei verflüchtigen sich die organischen Bestandteile besonders der Weichmacher und das Laminierhilfsmittel. Der Ausheizvorgang dauert ein bis zwei Tage. wobei 40 bis 60% der organischen Bestandteile aus dem Gleitkörper ausgetrieben werden. Danach kann der Gleitkörper gleichsam durch Fräsen oder Sägen bearbeitet werden, so daß er seine endgültigen Maße erhält. In dem Zeitraum von ca. 2 bis 4 Tagen wird dann der Restgehalt an organischen Bestandteilen bei Temperaturen zwischen 200 und 300°C ausgeheizt. Dabei wird ein Teil des Bindemittels in Restkohlenstoff umgesetzt, was später die Qualität des Gleitkörpers mitbestimmt. Dann folgt das Silicieren, d.h. Umwandeln der 10 Gew.-% C zu sekundär SiC, Auffüllen der Restporosität mit metallischem Si bei 1450-1800°C. Das während des Silicierungsvorganges entstehende feinstverteilte Sekundärcarbid verfestigt das ursprüngliche Gerüst und trägt wesentlich zur Stabilität des Werkstoffes und zu dessen ausgezeichneten Friktionseigenschaften bei. Der verbleibende nicht reagierende Anteil des freien Siliciums verbleibt als solcher im Werkstoff, der damit porenfrei ist. Das Ergebnis dieses Verfahrens ist ein homogener einstückiger Gleitkörper. der sich durch eine gleichmäßige Festigkeit auszeichnet. Der Gleitkörper wird dann je nach Verwendung geschliffen, geläppt oder poliert.

## Patentansprüche

1. Gleitkörper (1) in Ringform für Gleitringdichtungen, bei denen stirnseitige Gleitflächen (10) von Gleit- und Gegenbauteilen (4,5) einen Spalt (9) bilden, in dem sich ein Fluid (20) befindet, und wobei die Gleitflächen (10) einen Hydrodynamisierungseffekt gewährleisten, **dadurch gekennzeichnet**, daß

(a) der Gleitkörper (1) aus Keramik besteht,

(b) dicht unterhalb der Gleitfläche (10) im Gleitkörper (1) mehrere Kammern (6,15,16) und mehrere Stege (6b,17) in einer zur Gleitfläche (10) parallelen Ebene in Umfangsrichtung nebeneinander angeordnet sind,

(c) die Kammern (6,15,16) und die Stege (6b,17) von einer dünnen, flexiblen Membranschicht (10a), die die Gleitfläche (10) bildet, abgedeckt sind,

(d) die Membranschicht (10a) ein aus einer Keramikfolie oder -karte ausgestanztes, durch keramisches Brennen verbundenes Formelement ist, und

(e) die Membranschicht (10a) durch Krafteinwirkung im Bereich der Kammern (6,15,16) in zur Drehachse der Gleitringdichtung paralleler Richtung zur Bildung von Hydrodynamisierungswelligkeiten elastisch verformbar ist.

2. Gleitkörper nach Ansprüche 1, dadurch gekennzeichnet. daß die Membranschicht (10a) Bereiche aufweist, die dünner und/oder dicker sind als die normale Dikke beträgt, wobei die Gleifläche (10) eben ausgeführt ist.

3. Gleitkörper nach Ansprüch 1 oder 2, dadurch gekennzeichnet. daß auf der Gleitfläche (10) Hydrodynamisierungsvertiefungen (3a) angeordnet sind.

4. Gleitkörper nach einem oder mehreren der Ansprüche 1 bis 3 dadurch gekennzeichnet. daß der die Kammern (6) aufweisende Grundkörper massiv und einstückig ausgebildet ist

5. Gleitkörper nach einem oder mehreren der Ansprüche 1 bis 4, dadurch gekennzeichnet, daß der die Kammern (6) aufweisende Gleitkörper (1) zumindest im Bereich der Gleitflächen (10) aus mehreren aufeinandergestapelten. aus Folien oder Karten ausgestanzten dünnen Formelementen besteht, die an den Anlageflächen miteinander fest verbunden sind.

6. Gleitkörper nach Anspruch 5, dadurch gekennzeichnet, daß der Gleitkörper vollständig aus aufeinandergestapelten und laminierten, aus Folien oder Karten ausgestanzten dünnen Formelementen besteht.

7. Gleitkörper nach Anspruch 5 und/oder 6, dadurch gekennzeichnet, daß die aus Folien oder Karten ausgestanzten Formelemente aus keramischem Material bestehen.

8. Gleitkörper nach Anspruch 5 bis 7, dadurch gekennzeichnet, daß er als Gleitring (4) oder Gegenring (5) einer Gleitringdichtung ausgebildet ist und die Formelemente Folienringe (2d und 2a) gleichen Innen-. jedoch unterschiedlichen Außendurchmessers sind, die konzentrisch zur Achse (1a) positioniert sind.

9. Gleitkörper nach Anspruch 5, dadurch gekennzeichnet. daß die Kammem (6) durch Ausnehmungen und/oder eingedrückte Vertiefungen in den Formelementen gebildet werden.

10. Gleitkörper nach Anspruch 9, dadurch gekennzeichnet, daß die Ausnehmungen (6d) und/oder Vertiefungen kreisringförmig ausgebildet sind und aus einem Ring kleineren Durchmessers und einem Ring größeren Durchmesser gebildet werden. die konzentrisch zur Achse (1a) angeordnet sind.

11. Gleitkörper nach Anspruch 10, dadurch gekennzeichnet, daß mehrere Ausnehmungen (6) in einer Ebene liegend gebildet sind, die durch Stege (6b) voneinander getrennt sind.

12. Gleitkörper nach Anspruch 10 und/oder 11, dadurch gekennzeichnet, daß die Kammem (6) durch mehrere übereinander angeordnete und miteinander verbundene Ringe (5a, 6c oder 2b) gebildet sind.

13. Gleitkörper nach Anspruch 12, dadurch gekennzeichnet daß die Ringe Stege (6b) aufweisen, die fluchtend übereinander angeordnet sind.

14. Gleitkörper nach einem oder mehreren der Ansprüche 9 bis 13 dadurch gekennzeichnet, daß mehrere Kammern (6) etagenartig übereinander angeordnet und durch Ringe (2) voneinander getrennt sind.

15. Gleitkörper nach einem oder mehreren der Ansprüche 9 bis 14 dadurch gekennzeichnet, daß die Kammern (6) Eintrittsölfnungen (8) und Auslaßöffnungen (7) für das Fluid aufweisen.

16. Gleitkörper nach Anspruch 14 oder 15, dadurch gekennzeichnet, daß die Ringe (2) Durchgangsöftnungen (7a) aufweisen, die einen Durch gang für das Fluid zwischen zwei Kammern (6) bilden.

17. Gleitkörper nach einem oder mehreren der Ansprüche 14 bis 16, dadurch gekennzeichnet, daß die Durchgangsöffnungen (7a) übereinander angeordneter, benachbart liegender Kammem (6) in axialer Richtung versetzt zueinander angeordnet sind, wobei zwischen den Öffnungen (7a) aufeinanderfolgeader Ringe (2) ein Steg (6b) eines Kammerrings (6a, 6c) positioniert ist.

18. Gleitkörper nach einem oder mehreren der Ansprüche 5 bis 7, dadurch gekennzeichnet, daß das oberste Formelement, das die Gleitfläche (10) bildet, Hydrodynamisierunsvertiefungen (3a) aufweist.

19. Gleitkörper nach Anspruch 18, dadurch gekennzeichnet, daß das oberste Formelement ein Ring (3) ist, in dem im Bereich der Gleitflächen (10) Hydrodynamisierungsvertiefungen (3a) eingebracht sind.

20. Gleitkörper nach einem oder mehreren der Ansprüche 5 bis 19, dadurch gekennzeichnet, daß er mehrere massive Ringe (2a) gleicher Form, die ein erstes massives Ringpaket bilden, aufweist. auf denen ein Ring (6c) mit einer radialen Einlaßöffnung (8) und darauf mehrere Ringe (6a b2w. 2b) mit mindestens einer kreisringsegmentförmigen Ausnehmung (6d), die durch mindestens einen Steg (6b) unterbrochen wird, sowie abschließend mindestens ein Ring (2) mit einer axialen Durch gangsöffnung (7a) angeordnet sind. wobei die Ringe (6c, 6a, 2b und 2) gleichen Innendurchmesser und Außendurchmesser aufweisen, wobei jedoch der Außendurchmesser kleiner ist als der der den gleichen Innendurchmesser aufweisenden Ringe (2a) und die Ringe (6c, 6a, 2b und 2) ein zweites Ringpaket bilden. und daß auf dem oder den Ringen (2) mindestens ein Ring (6a) mit mindestens einer kreisringsegmentförmigen Ausnehmung (6d) und mindestens einem Steg (6b) und darauf mindestens ein oberer Ring (2) mit mindestens einer axialen Durchgangsöchnung (7a) sitzen, wobei die Öffnungen (7a) der Ringe (2) vorzugsweise axial versetzt zueinander angeordnet sind und sich zwischen den Öffnungen (7a) ein Steg oder mehrere übereinander angeordnete Stege (6b) befinden, und daß auf dem oder den oberen Ringen (2) mindestens ein Ring (6c) mit mindestens einer kreisringsegmentförmigen Ausnehmung (6d) und mindestens einem Steg (6b) und mindestens einer radialen Auslaßöchnung (7) sitzt, und daß auf dem oder den Ringen (6c) mindestens ein massiver Ring (2d) angeordnet ist, auf dem oder auf denen ein massiver Ring (3) mit in die äußeren Oberflächen eingebrachten Hydrodynamisierungsvertiefungen (3a) sitzt.

21. Gleitkörper nach einem oder mehreren der Ansprüche 1 bis 20, dadurch gekennzeichnet, daß im Grundkörper mehrere, in einer Ebene angeordnete Kammern (6) mit je einer Einlaßöffnung (8) und je einer Austrittsöffnung (7) für das Fluid vorgesehen sind, wobei die Kammern (6) mit einer Membranschicht (10) abgedeckt sind (Fig.3, 4).

22. Gleitkkörper nach einem oder mehreren der Ansprüche 1 bis 21, gekennzeichnet durch radial offene Ausnehmungen (15, 16) im Grundkörper, die axial ebenfalls von der Membranschicht (10a) abgedeckt sind (Fig. 8, 9).

23. Gleitkörper nach Anspruch 22, dadurch gekennzeichnet, daß zwischen der Membranschicht (10a) und dem Boden der Ausnehmungen (15, 16) Rippen (17) angeordnet sind.

24. Gleitkörper nach Anspruch 23, dadurch gekennzeichnet, daß die Rippen (17) den Gleitkörper nach außen überragen (Fig. 8, 9).

25. Gleitkörper nach einem oder mehreren der Ansprüche 1 bis 24, gekennzeichnet durch den Gleitkörper nach außen überragende Stege (17, 18) (Fig. 8, 9).

26. Gleitkörper nach einem oder mehreren der Ansprüche 1 bis 25, dadurch gekennzeichnet, daß in mindestens einer Kammer (6) ein Abstützelement (13) angeordnet ist (Fig. 5).

27. Gleitkörper nach einem oder mehreren der Ansprüche 1 bis 26, dadurch gekennzeichnet, daß in mindestens einer Kammer (6) ein Bauelement (14) zwischen der Membranschicht (10) und dem Boden der Kammer (6) angeordnet ist (Fig. 6),

28. Gleitkörper nach Anspruch 27, dadurch gekennzeichnet, daß das Bauelement (14) ein elektronisches Bauelement ist.

29. Gleitkörper nach Anspruch 27 und/oder 28, dadurch gekennzeichnet, daß das Bauelement (14) ein Sensor ist.

30. Gleitkörper nach Anspruch 26, dadurch gekennzeichnet, daß das Element (13) ein elektrisch betätigbarer Magnet ist.

31. Verfahren zur Herstellung eines Gleitkörpers nach einem oder mehreren der Ansprüche 1 bis 30, wobei einzelne Schichten gebildet und zusammengelügt bzw. gesintert werden, dadurch gekennzeichnet, daß Folien aus keramischen Schlickern hergestellt werden, aus den einzeinen Folien bzw. Karten die Form ausgestanzt bzw. geprägt wird, die dem Querschnitt des Gleitkörpers des Anspruchs 1 an der Stelle, an der die Folie bzw. Karten liegt, entspricht, auf die einzelnen Folien bzw. Karten ein Laminierungshilfsmittel aufgetragen wird, die einzelnen Folien bzw. Karten zu einem Gleitkörperpaket gestapelt werden und das Laminieren der einzelnen Schichten im Stapel erfolgt, wobei die organischen Bestandteile teilweise ausgeheizt werden, danach eine Nachbearbeitung der Geometrie des Gleitkörpers erfolgt, anschließend die restlichen organischen Bestandteile entfernt werden, dann der laminierte Gleitkörper zwischen 1200 bis 2200°C gesintert wird, wonach gegebenenfalls eine Nachbearbeitung durch Schleifen, Läppen oder Polieren erfolgt.

EP 0 092 716 B2

32. Verfahren nach Anspruch 31, dadurch gekennzeichnet, daß ein Schlicker verwendet wird, der aus keramischen Pulvern hergestellt worden ist, die mit organischen Bindemitteln, Dispergier-und Verdünnungsmitteln und gegebenenfalls Weichmachern und sonstigen Hilfsmitteln in Form von Ölen gemischt worden sind.

33. Verfahren nach Anspruch 32, dadurch ge kennzeichnet, daß als Dispergierüngs- und verdünnungsmittel für die organischen Bindemittel Wasser oder organische Lösungen, wie z. B. Äthanol, Toluol- und Trichloräthylen verwendet werden.

34. Verfahren nach einem oder mehreren der Ansprüche 31 bis 33, dadurch gekennzeichnet, daß die folgende Rahmenrezeptur verwendet wird:

| | |
|---|---|
| Pulver | 60–70 Gew.-% |
| Bindemittel | 7–10 Gew.-% |
| Lösungsmittel | 23–30 Gew.-%. |

35. Verfahren nach einem oder mehreren der Ansprüche 31 bis 34, dadurch gekennzeichnet, daß die Aufbereitung des Gießschlickers mit Ultraschall erfolgt.

36. Verfahren nach einem oder mehreren der Ansprüche 31 bis 35, dadurch gekenneichnet, daß während des Gießens vibriert wird.

37. Verfahren nach einem oder mehreren der Ansprüche 31 bis 36, dadurch gekennzeichnet, daß Schichten von 0,1 bis 1,5 mm gegossen werden.

38. Verfahren nach einem oder mehreren der Ansprüche 31 bis 37, dadurch gekennzeichnet, daß die Folien in einem vorlaminierungsprozeß zu Karten mit einem Laminierhilfsmittel verbunden werden, aus den Karten Ausnehmungen ausgestanzt oder in die Karten Vertiefungen eingeprägt werden, wobei vorzugsweise Temperaturen von 20-120 °C und Drücke von 5-100 bar benutzt werden.

39. Verfahren nach einem oder mehreren der Ansprüche 31 bis 38, dadurch gekennzeichnet, daß beim Laminieren Drücke von 0,1-15 bar in Zeitintervallen von 1 bis 10 Sec. angewendet werden.

40. Verfahren nach einem oder mehreren der Ansprüche 31 bis 38, dadurch gekennzeichnet, daß das Ausheizen der organischen Bestandteile zunächst bis auf 40-60% des Kunststoffanteils erfolgt, danach der Gleitkörper bearbeitet wird, anschließend das vollständige Ausheizen der restlichen organischen Bestandteile und danach das Sintern durchgeführt werden.


**Claims**

1. A ring-shaped sliding body (1) for sliding ring seals, in which the front sliding surfaces (10) of sliding and opposing components (4, 5) form a gap (9) in which a fluid (20) is located and wherein the sliding surfaces (10) ensure a hydrodynamic effect,
**characterised in that**
a) the sliding body (1) consists of ceramic,
b) a plurality of chambers (6, 15, 16) and a plurality of lands (6b, 17) are located alongside each other in a circumferential direction in planes parallel to a sliding surface (10) closely beneath the sliding surface (10) in the sliding body (1),
c) the chambers (6, 15, 16) and the lands (6b, 17) are covered with a thin flexible membrane layer (10a) which forms the sliding surface (10),
d) the membrane layer (10a) comprises a form element stamped from ceramic foils or sheets bound by ceramic firing, and
e) the membrane layer (10a) is elastically deformable through the effect of forces in the vicinity of the chambers (6, 15, 16) in a direction parallel to the axis of rotation of the sliding ring seal in order to give rise to hydrodynamic rippling.

2. A sliding body according to claim 1, characterised in that the membrane layer (10a) has portions which are thinner and/or thicker than the normal thickness, whereby the sliding surface (10) is made even.

3. A sliding body according to claim 1 or 2, characterised in that recesses (3a) giving rise to a hydrodynamic effect are located on the sliding surface (10).

4. A sliding body according to one or more of claims 1 to 3, characterised in that the base body containing the chambers (6) is of integral one-piece construction.

5. A sliding body according to one or more of claims 1 to 4, characterised in that the sliding body (1) with the chambers (6) consists of a plurality of thin form elements stamped from foil or sheet stacked on top of each other which are firmly bound to the supporting surface.

10

6. A sliding body according to claim 5, characterised in that the sliding body consists entirely of thin form elements stamped from foil or sheet which are stacked on top of each other and laminated.

7. A sliding body according to claim 5 and/or 6, characterised in that the form elements stamped from foil or sheet consist of ceramic material.

8. A sliding body according to claims 5 to 7, characterised in that a sliding ring seal comprises a sliding ring (4) or a counter ring (5) and the form elements are foil rings (2d and 2a) of the same internal diameter but different external diameter which are positioned concentrically about the axis (1a).

9. A sliding body according to claim 5, characterised in that the chambers (6) are formed of cut-outs and/or impressed recesses in the form elements.

10. A sliding body according to claim 9, characterised in that the cut-outs (6d) and/or recesses are formed in the shape of a circular ring and are formed of a ring of smaller diameter and a ring of larger diameter which are concentric about the axis (1a).

11. A sliding body according to claim 10, characterised in that a plurality of cut-outs (6) are constructed to lie in a plane and are separated from each other by means of lands (6b).

12. A sliding body according to claim 10 and/or 11, characterised in that the chambers (6) are formed from a plurality of lands (5a, 6c or 2b) which are placed on top of each other and are bound together.

13. A sliding body according to claim 12, characterised in that the rings have lands (6b) which are transiently arranged over each other.

14. A sliding body according to one or more of claims 9 to 13, characterised in that several chambers (6) are arranged in stages one above the other and are separated from each other by means of rings (2).

15. A sliding body according to one or more of claims 9 to 14, characterised in that the chambers (6) have inlet openings (8) and outlet openings (7) for the fluid.

16. A sliding body according to claim 14 or 15, characterised in that the rings (2) have open passageways (7a) which provide a passageway for the fluid between two chambers (6).

17. A sliding body according to one or more of claims 14 to 16, characterised in that the open passageways (7a) are chambers (6) lying adjacent and above each other and offset with respect to each other in an axial direction, wherein a land (6b) of a chamber ring (6a, 6c) is positioned between the passageways (7a) of sequential rings (2).

18. A sliding body according to one or more of claims 5 to 7, characterised in that the uppermost form element which forms the sliding surface (10) has recesses (3a) which produce a hydrodynamic effect.

19. A sliding body according to claim 18, characterised in that the uppermost form element is a ring (3) in which recesses (3a) producing a hydrodynamic effect are incorporated in the vicinity of the sliding surfaces (10).

20. A sliding body according to one or more of claims 5 to 13, characterised in that it has a plurality of massive rings (2a) of the same shape which form a first massive packet of rings in which one ring (6c) with a radial inlet opening (8) and a plurality of rings thereupon (6a and 6b) is provided with at least one cut-out (6d) in the shape of a segment of a circular ring which is interrupted by at least one land (6b) and ending in at least one ring (2) with an axial open passageway (7a), wherein the rings (6c, 6a, 2b and 2) have the same internal diameter and external diameter, wherein however the external diameter is smaller than that of the ring (2a) having the same internal diameter and the rings (6c, 6a, 2b and 2) form a second packet of rings, in that at least one ring (6a) on the ring or rings (2) has at least one recess (6d) in the form of a circular ring segment and at least one land (6b) and in that at least one upper ring (2) with at least one axial open passage (7a) lies thereupon, wherein the passageways (7a) of the rings (2) are preferably axially offset with respect to each other and in that a land or a plurality of superimposed lands (6b) are arranged between the passageways (7a) and in that at least one ring (6c) with at least one recess (6d) in the form of a segment of a circular ring and at least one land (6b) and at least one radial outlet opening (7) lies upon the upper ring or rings (2) and in that at least one massive ring (2d) is arranged on the ring or rings (6c), overlain by a massive ring (3) with recesses (3a) giving rise to a hydrodynamic effect on the outer surface.

21. A sliding body according to one or more of claims 1 to 20, characterised in that a plurality of chambers (6) with one inlet opening (8) and one outlet opening (7) each for the fluid arranged in a plane are provided in the base body, wherein the chambers (6) are coated with a membrane layer (10) (Figures 3, 4).

22. A sliding body according to one or more of claims 1 to 21, characterised by radial open cut-outs (15, 16) in the base body, which are likewise axially covered with the membrane layer (10a) (Figures 8, 9).

23. A sliding body according to claim 22, characterised in that ribs (17) are provided between the membrane layer (10a) and the floor of the cut-outs (15, 16).

24. A sliding body according to claim 23, characterised in that the ribs (17) project outward from the sliding body (Figures 8, 9).

25. A sliding body according to one or more of claims 1 to 24, characterised by lands (17, 18) which project outwards from the sliding body (Figures 8, 9).

26. A sliding body according to one or more of claims 1 to 25, characterised in that a supporting element (13) is provided in at least one chamber (6).

27. A sliding body according to one or more of claims 1 to 26, characterised in that a structural member (14) is provided between the membrane layer (10) and the floor of the chamber (6) in at least one chamber (6) (Figure 6).

28. A sliding body according to claim 27, characterised in that the structural member (14) is an electronic component.

29. A sliding body according to claim 27 and/or 28, characterised in that the component (14) is a sensor.

30. A sliding body according to claim 26, characterised in that the element (13) is an electrically activatable magnet.

31. A method for the manufacture of a sliding body according to one or more of claims 1 to 30, in which individual layers are formed and joined or sintered together, characterised in that the foils are manufactured from ceramic slips, from which the shapes are stamped or pressed out from individual foils or sheets, which correspond to the cross-section of the sliding body in claim 1 at the point where the foil or sheet lies, a lamination assisting agent is applied to the individual foils or sheets, the individual foils or sheets are stacked into a sliding body packet and the individual layers in the stack are laminated, wherein the organic components are partly heated, after which subsequent processing forms the geometry of the sliding body, after which the remaining organic components are removed, and after which the laminated sliding body is sintered between 1200 and 2200°C, after which subsequent processing by means of grinding, lapping or polishing is performed as required.

32. A method according to claim 31, characterised in that a slip which has been manufactured from ceramic powders mixed with organic binding agents, dispersants and diluents and if necessary softeners and other additives in the form of oils, is used.

33. A method according to claim 32, characterised in that water or organic solutions such as e.g. ethanol, toluene and trichloroethylene are used as a dispersing and thinning agent for the organic binder.

34. A method according to one or more of claims 31 to 33, characterised in that the following recipe is used:

```
Powder       60-70% w/w
Binder        7-10% w/w
Solvent      23-30% w/w.
```

35. A method according to one or more of claims 31 to 34, characterised in that the poured slip is prepared using ultrasound.

36. A method according to one or more of claims 31 to 35, characterised in that vibration is applied during pouring.

37. A method according to one or more of claims 31 to 36, characterised in that layers of 0.1 to 1.5 mm are poured.

38. A method according to one or more of claims 31 to 37, characterised in that the foils are bound together into sheets using a laminating agent in a prelamination process, cut-outs are stamped from the sheets and recesses are impressed in the sheets, wherein preferably temperatures 20-120°C and pressures of 5-100 bars are used.

39. A method according to one or more of claims 31 to 38, characterised in that pressures of 0.1-15 bars at time intervals from 1 to 10 seconds are used during lamination.

40. A method according to one or more of claims 31 to 38, characterised in that the organic components are initially driven off by heat to 40-60% of the plastics proportion, after which the sliding body is shaped, and after which the remaining organic components are then completely driven off and then the sintering is performed.

**Revendications**

1.Corps de glissement (1) en forme d'anneau pour des joints d'étanchéité à anneau de glissment, dans lesquels des surfaces de glissement (10) frontales de composants de glissement et de contre-composants constituent une fente (9) dans laquelle se trouve un fluide, et où les surfaces de glissement (1d) garantissent un effet d'hydrodynamisation,

**caractérisé en ce que**:

(a) le corps de glissement est constitué de céramique,

(b) de façon étanche au-dessous de la surface de glissement (10) dans le corps de glissement (1) sont disposées côte à côte plusieurs chambres (6, 15, 16) et plusieurs entretoises (6b, 17), dans un plan parallèle à la surface de glissement (10) dans la direction périphérique,

(c) les chambres (6, 15, 16) et les entretoises (6b, 17) sont recouvertes par une couche formant membrarne (10a), mince et flexible, qui forme la surface de glissement (10),

(d) la couche formant membrane (10a) est un élément de forme estampée dans une feuille ou une carte de céramique, lié par brûlage céramique, et

(e) la couche formant membrane (10a) est déformable élastiquement par l'action d'une force dans le domaine de la chambre (6, 15, 16), dans la direction de l'axe de rotation du joint d'étanchéité à anneaux de glissement, pour former des ondulations d'hydrodynamisation.

2. Corps de glissement selon la revendication 1, caractérisé en ce que la couche formant membrane (10a) présente des domaines qui sont plus minces et/ou plus épais que la valeur normale de l'épaisseur, la surface de glissement (10) étant réalisée plane.

3. Corps de glissement selon la revendication 1 ou la revendication 2, caractérisé en ce que sur la surface de glissement (10) sont disposées des cavités (3a) d'hydrodynamisation.

4. Corps de glissement selon une ou plusieurs des revendications 1 à 3, caractérisé en ce que le corps de base qui présente les chambres (6), possède une structure massive et d'un seul tenant.

5. Corps de glissement selon une ou plusieurs des revendications 1 à 4, caractérisé en ce que le corps de glissement (1) qui présente les chambres (6), se compose au moins dans le domaine des surfaces de glissement (10), de plusieurs pièces de formes minces estampées dans des feuilles ou cartes empilées les unes sur les autres, qui sont reliées de façon fixe les unes avec les autres sur les surfaces d'appui.

6.Corps de glissement selon la revendication 5, caractérisé en ce que le coprs de glissement se compose entièrement de pièces de forme mince empilées les unes sur les autres et laminées, estampées dans les feuilles ou cartes.

7. Corps de glissement selon la revendication 5 et/ou 6, caractérisé en ce que les pièces de forme estampées dans les feuilles ou cartes, se composent d'un métariau céramique.

8. Coprs de glissement selon l'une des revendications 5 à 7, caractérisé en ce qu'il présente la structure d'un anneau glissant (4) ou d'un contre-anneau (5) d'un joint étanche à anneau glissant et en ce que les pièces de forme sont des anneaux de feuilles (2d et 2a), de même diamètre intérieur mais de diamètres extérieurs qui sont positionnés concentriquement à l'axe (1a).

9. Corps de glissement selon la revendication 5, caractérisé en ce que les chambres (6) sont constituées par des évidements et/ou des cavités empreintes dans les pièces de forme.

10. Corps de glissement selon la revendication 9, caractérisé en ce que les évidements et/ou cavités (6d) présentent une structure d'anneau circulaire et sont constitués d'un anneau de diamètre plus petit et d'un anneau de plus grand diamètre, qui sont disposés concentriquement à l'axe (1a).

11. Corps de glissement selon la revendication 10, caractérisé en ce qu'on ménage plusieurs évidements (6) disposés dans un plan, qui sont séparés les uns des autres par des entretoises (6b).

12. Corps de glissement selon la revendication 10 et/ou 11, caractérisé en ce que les chambres (6) sont constituées de plusieurs anneaux (5a, 6c ou 2b) disposés les uns au-dessus des autres et reliés les uns aux autres.

13. Corps de glissement selon la revendication 12, caractérisé en ce que les anneaux présentent des entretoises (6b) qui sont disposées alignées les unes au-dessus des autres.

14. Corps de glissement selon une ou plusieurs des revendications 9 à 13, caractérisé en ce que plusieurs chambres (6) sont disposées les unes au-dessus des autres de façon étagée et sont séparées les unes des autres par des anneaux (2).

15. Corps de glissement selon une ou plusieurs des revendications 9 à 14, caractérisé en ce que les chambres (6) présentent des ouvertures d'entrée (8) et des ouvertures de sortie (7) pour le fluide.

16. Corps de glissement selon la revendication 14 ou 15, caractérisé en ce que les anneaux (2) présentent des ouvertures (7a) de passage qui constituent un passsage pour le fluide entre deux chambres (6).

17. Corps de glissement selon une ou plusieurs des revendications 14 à 16, caractérisé en ce que les ouvertures (7a) de passage de chambres (6) voisines, disposées les unes sur les autres axiale, sont décalées les unes par rapport aux autres, une entretoise (6b) de l'anneau de chambre (6a, 6c) étant positionnée entre les ouvertures (7a) d'anneaux (2) qui se superposent.

18. Corps de glissement selon une ou plusieurs des revendications 5 à 17, caractérisé en ce que la pièce de forme supérieure, qui constitue la surface de glissement (10), présente des cavités (3a) d'hydrodynamisation.

19. Corps de glissement selon la revendication 18, caractérisé en ce que la pièce de forme supérieure est un anneau (3), dans lequel dans le domaine des surfaces (10) de glissement on ménage des cavités (3a) d'hydrodynamisation.

20. Corps de glissement selon une ou plusieurs des revendications 5 à 19, caractérisé en ce qu'il présente plusieurs anneaux massifs (2a) de même forme, qui constituent un premier paquet massif d'anneaux, sur lesquels sont disposés un anneau (6c) avec une ouverture radiale (8) d'entrée puis sur celui-ci plusieurs anneaux (6a ou 2b) avec au moins un évidement (6d) en forme de segment annulaire circulaire qui est interrompu par au moins une entretoise (6b), ainsi qu'enfin au moins un anneau (2) avec une ouverture axiale (7a), les anneaux (6c, 6a, 2b et 2) présentant le même diamètre intérieur et le même diamètre extérieur, le diamètre extérieur étant pourtant inférieur à celui des anneaux (2a) de même diamètre intérieur, et les anneaux (6c, 6a, 2b et 2) constituant un deuxième paquet d'anneaux, et en ce que sur le ou les anneaux (2) reposent au moins un anneau (6a) avec au moins un évidement (6d) en forme de segment annulaire circulaire et au moins une entretoise (6b) et sur celle-ci au moins un anneau supérieur (2) avec au moins une ouverture (7a) axiale de passage, les ouvertures (7a) des anneaux (2) étant de préférence disposées décalées axialement les unes par rapport aux autres, et une entretoise ou plusieurs entretoises (6b) disposées les unes au-dessus des autres se trouvant entre les ouvertures (7a), et en ce que sur les anneaux supérieurs (2) repose au moins un anneau (6c) avec au moins un évidement (6d) en forme de segment annulaire circulaire et au moins une entretoise (6b) et au moins une ouverture (7) radiale de sortie, et en ce que sur l'anneau ou les anneaux (6c) est disposé au moins un anneau massif (2d), sur lequel ou lesquels repose un anneau massif (3) avec des cavités (3a) d'hydsodynamisation ménagées dans les surfaces extérieures.

21. Corps de glissement selon urne ou plusieurs des revendications 1 à 20, caractérisé en ce que dans le corps de base sont prévues plusieurs chambres (6) disposées dans un plan, pourvues chacune d'une ouverture (8) d'entrée et d'une ouverure (7) de sortie pour le fluide, les chambres (6) étant recouvertes d'une couche (10) formant membrane (fig. 3, 4).

22. Corps de glissement selon une ou plusieurs des revendications 1 à 21, caractérisé par des évidements ouverts radialement (15, 16) dans le corp de base, qui sont également recouverts axialement par la couche formant membrane (10a) (fig. 8, 9).

23. Corps de glissement selon la revendication 22, caractérisé en ce qu'entre la couche formant membrane (10a) et le fond des évidements (15, 16) sont disposées des nervures (17).

24. Corps de glissement selon la revendication 23, caractérisé en ce que les nervures (17) font saillie en dehors du corps de glissement (fig. 8, 9).

25. Corps de glissement selon une ou plusieurs des revendications 1 à 24, caractérisé par des entretoises (17, 18) faisant saillie hors du corps de glissement (fig. 8, 9).

26. Corps de glissement selon une ou plusieurs des revendications 1 à 25, caractérisé en ce que dans au moins une chambre (6) est disposé un élément d'appui (13) (fig. 5).

27. Corps de glissement selon une ou plusieurs des revendications 1 à 26, caractérisé en ce que, dans au moins une chambre (6) est disposé un composant (14) entre la couche formant membrane (10) et le fond de la chambre (6) (fig. 6).

28. Corps de glissement selon la revendication 27, caractérisé en ce que le composant (14) est un composant électronique.

29. Corps de glissement selon la revendication 27 ou 28, caractérisé en ce que le composant (14) est un capteur.

30. Corps de glissement selon la revendication 26, caractérisé en ce que l'élément (13) est un aimant actionnable électriquement.

31. Procédé de fabrication d'un corps de glissement selon une ou plusieurs des revendications 1 à 30, plusieurs couches étant constituées et jointes ou frittées les unes aux autres, caractérisé en ce que l'on réalise des feuilles en barbotines céramiques, que dans les feuilles ou cartes individuelles ou estampe ou matrice le forme qui correspond à la coupe transversale du corps de glissement de la revendication 1, à l'emplacement où est située la feuille ou carte, que sur les feuilles ou cartes individuelles on amène un adjuvant de laminage, en ce que les feuilles ou cartes individuelles son empilées en un paquet de corps de glissement, et que le laminage des couches individuelles est réalisé en paquet, les fractions organiques restantes étant partiellement étuvées, qu'on exécute ensuite une finition de la géométrie du corps de glissement, qu'immédiatement après on enlève les fractions organiques restantes, qu'ensuite le corps de glissement laminé est fritté entre 1 200 et 2 200°C, à la suite de quoi on réalise éventuellement une finition par meulage, rodage ou polissage.

32. Procédé selon la revendication 31, caractérisé en ce qu'on utilise une barbotine, qui est produite à partir de poudres céramiques, qui sont mélangées avec des liants, des milieux dispersifs ou diluants organiques et éventuellement des plastifiants et divers adjustants sous forme d'huiles.

33. Procédé selon la revendication 32, caractérisé en ce qu'on emploie de l'eau ou des solutions organiques comme de l'éthanol, du toluol ou du trichlorétylène comme milieux dispersifs ou diluants pour des liants organiques.

34. Procédé selon une ou plusieurs des revendications 31 à 33, caractérisé en ce que l'on emploie la formulation cadre suivante

| | |
|---|---|
| Poudre | 60 à 70 % en poids |
| Liant | 7 à 10 % en poids |
| Solvant | 23 à 30 % en poids. |

35. Procédé selon une ou plusieurs des revendications 31 à 34, caractérisé en ce que la préparation de la barbotine coulable est effectuée aux ultrasons.

36. Procédé selon une ou plusieurs des revendications 31 à 35, caractérisé en ce que l'on vibre en cours de coulée.

37. Procédé selon une ou plusieurs des revendications 31 à 36, caractérisé en ce que l'on coule des couches de 0,1 à 1,5 mm.

38. Procédé selon une ou plusieurs des revendications 31 à 37, caractérisé en ce que les feuilles sont reliées en cartes dans un processus de prélaminage à l'aide d'adjuvants de laminage, en ce que dans les cartes on estampe des évidements ou que l'on matrice des cavités, en utilisant de préférence des températures de 20 à 120°C et des pressions de 5 à 100 bars.

39. Procédé selon une ou plusieurs des revendications 31 à 38, caractérisé en ce que l'on emploie au laminage des pressions de 0,1 à 15 bars pendant des intervalles de temps de 1 à 10 secondes.

40. Procédé selon une ou plusieurs des revendications 31 à 38, caractérisé en ce que l'étuvage des fractions organiques est d'abord mené jusqu'à 40 à 60% de la fraction de plastique, puis que le corps de glissement est usiné, qu'immédiatement ensuite on étuve les fractions organiques restantes et qu'enfin on réalise le frittage.

FIG.1

FIG.2

FIG.3

FIG.4

FIG.5

FIG.6

FIG. 8

FIG. 7

FIG.10

FIG.9

FIG.11